# EUROPEAN PATENT APPLICATION

(11) **EP 0 885 771 A1**
(43) Date of publication of application: **23.12.1998**
(21) Application number: 98202011.7
(22) Date of filing: 16.06.1998
(51) Int. Cl.: B60P 1/44

(54) **Loading lift for mounting to the longitudinal edge of the container of a vehicle**

(30) Priority: 19.06.1997 BE 9700526
(71) Applicant: NV NUYTS ORB, 2300 Turnhout (BE)
(72) Inventor: Nuyts, Henri, 2300 Turnhout (BE)
(74) Representative: Lips, Hendrik Jan George, Ir.

(57) **Abstract**

Loading lift (12) for mounting to the container of a vehicle (1) such as a truck, to wit in particular to the longitudinal edge thereof. The loading lift comprises sliders (3) being guided by columns (2) which in vertical position can be connected to the container of the vehicle. Loading platform (4) is pivotally connected to said sliders and can function as side wall of the container in the vertical position. In the horizontal position, loading platform (4) can be moved up and down in vertical direction through sliders (3). For stiffening the loading platform, a reinforcement pipe (7) pivotally connected to said loading platform is provided, guiding means (6, 11) being present, having one side connected to sliders (3) and the other to reinforcement pipe (7) in such a way that the reinforcement pipe is not able to move or can only perform a slight rotational movement on pivoting action of the loading platform.

## Description

The invention relates to a loading lift for mounting to the longitudinal edge of the container of a vehicle as defined in the preamble of claim 1.

Such a loading lift is known from DE-C-3619124. Since this loading lift extends along at least a major part of the longitudinal edge, its loading platform has a considerable length. It is desirable to limit the thickness of the loading platform as much as possible, since it is situated laterally of the vehicle and thus increases the vehichle width. However, bending of the loading platform must be minimal. In connection with that, a reinforcement pipe is mounted between the sliders, to which pipe the loading platform is pivotally connected. The pipe has a rectangular cross-section in order to limit its width at maximum stiffness. The pipe will be situated as closely to the vehicle side wall as possible in order to limit its width as well so that the loading platform is only reinforced at the pivot. Further, by mounting the reinforcement pipe there is a risk that on moving the loading platform upward, the foot of a person standing on the loading platform will get stuck between the pipe and the loading platform.

The object of the invention is to remove these difficulties and to support the loading platform by a reinforcement pipe at a distance from the pivot point and thus without the pipe serving as a pivot.

According to the invention, this is achieved by employing the measures as defined in the characterizing portion of claim 1.

Further measures employed according to the invention are described in the subclaims and are explained by way of an embodiment shown in the drawing, in which:
Fig. 1 shows diagrammatically a side elevation of a part of a device according to the invention with the loading platform in the horizontal operating position;
Fig. 2 shows a view corresponding to Fig. 1, but with the loading platform in the vertical position;
Fig. 3 shows diagrammatically a side elevation of a larger part of the device with the loading platform in the horizontal position;
Fig. 4 shows a view corresponding to Fig. 3, but with the loading platform in the vertical position;
Fig. 5 shows a cross-section across the sliders and columns of the device with the loading platform in the horizontal position; and
Fig. 6 shows a cross-section corresponding to Fig. 5, but with the loading platform in the vertical position.

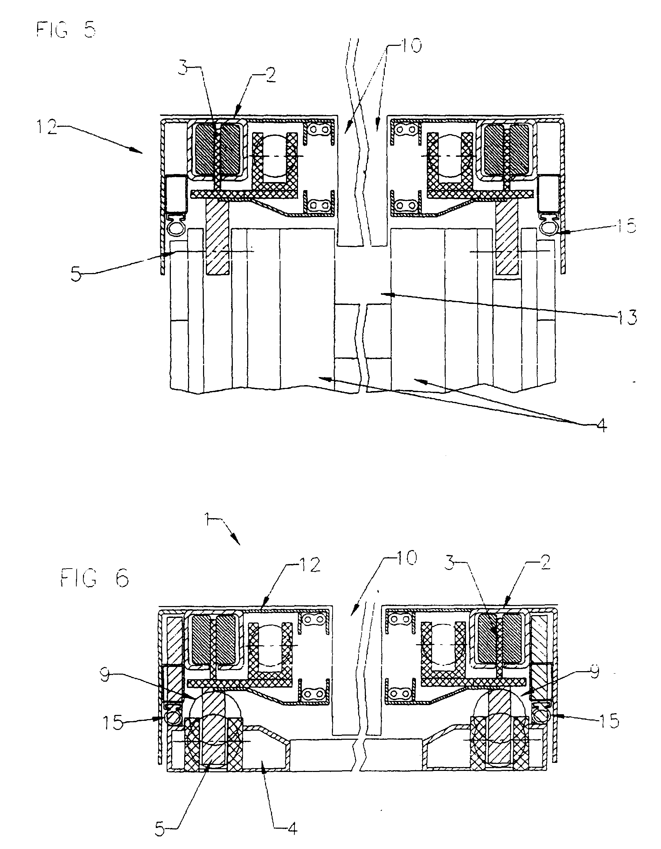

To a vehicle 1, its roof 14 and loading floor 10 being shown in Fig. 4 in particular, the loading lift 12 is mounted in longitudinal direction of the container.

The loading lift 12 comprises the columns 2 along which the sliders 3 are moveable in vertical height by means not further indicated, such as by pressurized medium operated cylinders.

In the points 5, the loading platform 4 of the loading lift is pivotally connected to the sliders 3 and can be brought into the horizontal or vertical position by means of the pressurized medium operated cylinders 9. In the vertical position, the loading lift can function for partially closing off the longitudinal side of the container of the vehicle while its upper part can then be closed off by the hatch 8 as illustrated in Fig. 4.

The loading platform 4 is pivotally connected to the reinforcement pipe 7 having a rectangular cross-section so that it has a largest possible stiffness in vertical direction.

The lower end of said pipe 7 is pivotally connected to a guiding part 6 in the shape of a rod in turn being pivotally connected to a bracket 11 being fixedly connected to the slider 3. Naturally, a bracket 11 and a guiding part 6 can be mounted at both sliders 3.

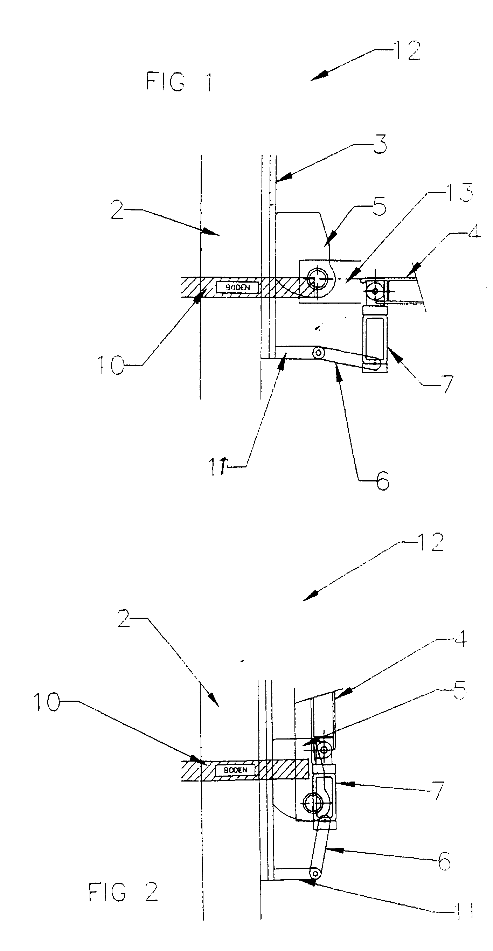

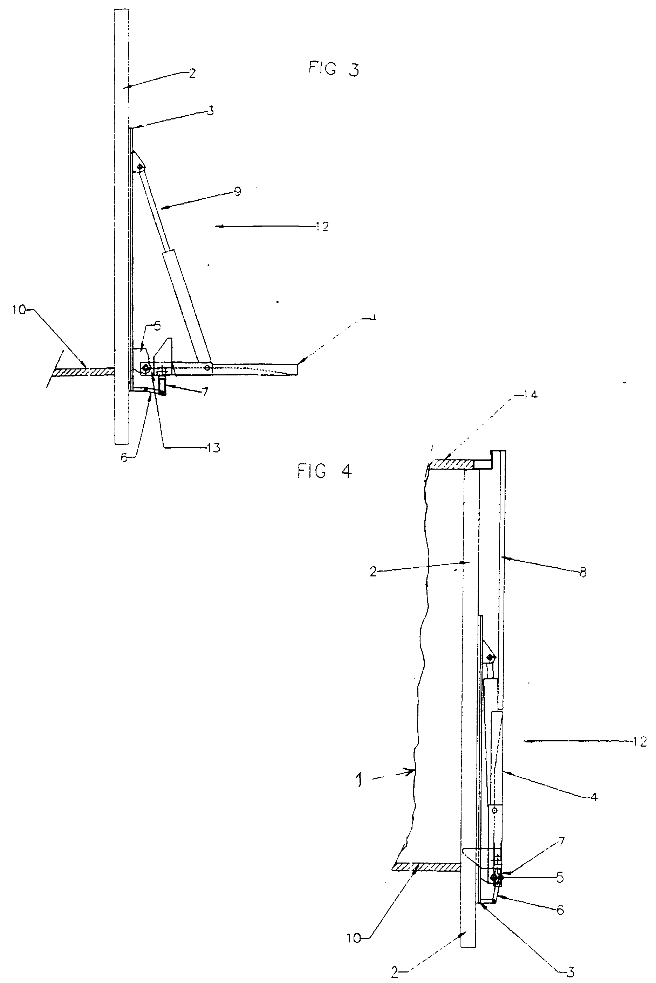

In the figures 1 and 3, the loading platform 4 is in the horizontal position, to wit at loading platform 10 height. The reinforcement pipe 7 is then at some distance from the pivot points 5 between the loading platform 4 and the sliders 3. The reinforcement pipe 7 is mounted along the loading platform edge facing the vehicle so that an opening 13 remains between said edge and the reinforcement pipe 7. Then there won't be any risk that a person standing on the platform will get his foot stuck between the platform and the reinforcement pipe on upward movement of the platform.

On pivoting the loading platform into the vertical position, the reinforcement pipe will not pivot, or pivot only slightly, so that it will come to lie against the vehicle container wall as closely as possible and takes up as little space as possible. This appears from the figures 2 and 4.

The figures 5 and 6 illustrate the columns 2 and the sliders 3 as well as the pivot points of the loading platform 4 in cross-section in more detail, to wit in the horizontal and vertical positions of the loading platform, respectively.

In the vertical position of the loading platform, it abuts the sealing strips 15 being connected to the container of the vehicle.

It will be obvious, that only one possible embodiment of a loading lift according to the invention is illustrated in the drawing and described above and that many changes can be made without departing the inventive idea, as it is indicated in the accompanying claims.

## Claims

1. Loading lift (12) for mounting to the container of a vehicle (1) such as a truck, to wit in particular to the longitudinal edge thereof, said loading lift comprising sliders (3) being guided by columns (2) which in the vertical position can be connected to the container of the vehicle, in which the loading platform (4) in the vertical position can function as side wall of the container and can be moved up and down in vertical direction in the horizontal position, a reinforcement pipe (7) being provided for stiffening the loading platform, characterized in that the loading platform (4) is pivotally connected to the sliders (3) and that at some distance from the pivot points (5) between loading platform and sliders, the reinforcement pipe (7) is pivotally connected to the loading platform and guiding means (6, 11) are provided, which are connected to said sliders (3) at one side and to said reinforcement pipe (7) at the other side, in such a way that the reinforcement pipe is not able to move or can only perform a slight rotational movement on pivoting action of the loading platform.

2. Loading lift according to claim 1, characterized in that the guiding means are represented by a guiding part (6) pivotally connected to the reinforcement pipe (7), said guiding part being in the form of a rod having its other end pivotally connected to a bracket (11) fixedly connected to the slider (3).

3. Loading lift according to claim 1 or 2, characterized in that the reinforcement pipe (7) is mounted to the longitudinal edge of the loading platform (4) facing the vehicle (1), as seen in horizontal position of said loading platform.

4. Loading lift according to one of the preceding claims, characterized in that in the horizontal position of the loading platform (4) there is an opening (13) between the loading floor (10) and the loading platform edge facing the loading floor.
